# EUROPÄISCHE PATENTSCHRIFT

(11) **EP 3 889 463 B1**
(45) Veröffentlichungstag und Bekanntmachung des Hinweises auf die Patenterteilung: **28.12.2022**
(21) Anmeldenummer: 21157772.1
(22) Anmeldetag: 18.02.2021
(51) Int. Cl.: F16H 3/091, F16H 3/093, F16H 3/097, B60K 6/547

(54) **HYBRID-ANTRIEBSBAUGRUPPE**
HYBRID DRIVE MODULE
MODULE D'ENTRAÎNEMENT HYBRIDE

(30) Priorität: 31.03.2020 DE 102020108833
(43) Veröffentlichungstag der Anmeldung: 06.10.2021
(73) Patentinhaber: Getrag Ford Transmissions GmbH, 50735 Köln (DE)
(72) Erfinder: Nasdal, Roland, 50189 Elsdorf (DE)
(74) Vertreter: Wagner Albiger & Partner Patentanwälte mbB

(56) Entgegenhaltungen:
- EP-B1- 2 655 111
- DE-A1- 19 960 621
- DE-A1-102011 089 466
- DE-A1-102014 215 842

## Beschreibung

Die Erfindung betrifft eine Hybrid-Antriebsbaugruppe für ein Kraftfahrzeug, die eine E-Maschine und ein Schaltgetriebe aufweist.

Die EP 2 655 111 B1 offenbart eine Hybrid-Antriebsbaugruppe mit E-Maschine und Schaltgetriebe, das eine erste Eingangswelle aufweist, die im eingebauten Zustand mit einem Verbrennungsmotor des Kraftfahrzeugs über eine Kupplung verbunden ist. Koaxial zu dieser ersten Eingangswelle ist eine zweite Eingangswelle angeordnet, die mit einem Rotor der E-Maschine über ein Planetenradgetriebe verbunden ist. Der Rotor ist dabei koaxial zur ersten Eingangswelle bzw. zur zweiten Eingangswelle angeordnet. Es handelt sich um ein Inline-Getriebe, bei dem eine Ausgangswelle, welche mit einem Abtrieb des Kraftfahrzeugs verbunden ist, koaxial zur ersten Eingangswelle angeordnet ist.

Das in der EP 2 655 111 B1 offenbarte Schaltgetriebe weist des Weiteren eine erste Vorgelegewelle und eine zweite Vorgelegewelle auf, die parallel und beabstandet zu der ersten Eingangswelle verlaufen. Die beiden Vorgelegewellen weisen eine gemeinsame Drehachse auf. Eine motorseitige Zahnradpaarung sorgt für eine drehfeste Verbindung zwischen der zweiten Eingangswelle und der zweiten Vorgelegewelle. Die motorseitige Zahnradpaarung weist ein auf der zweiten Eingangswelle angeordnetes Antriebsrad und ein auf der zweiten Vorgelegewelle angeordnetes Antriebszwischenrad auf, das mit dem Antriebsrad kämmt. Antriebsrad und Antriebszwischenrad sind jeweils als Festrad ausgeführt. Die motorseitige Zahnradpaarung kann daher auch als Eingangskonstante bezeichnet werden. Des Weiteren ist eine zweite motorseitige Zahnradpaarung bestehend aus Festrädern vorgesehen, durch die die erste Eingangswelle drehfest mit der ersten Vorgelegewelle verbunden ist.

Das Schaltgetriebe der EP 2 655 111 B1 weist ein erstes Teilgetriebe mit mehreren Hauptgängen und ein zweites Teilgetriebe mit mehreren Nebengängen auf. Den Hauptgängen und den Nebengängen kann jeweils ein Festrad und ein damit kämmendes Losrad zugeordnet werden, wobei das jeweilige Losrad durch eine Gangschaltkupplung mit der Welle, auf der das Losrad sitzt, drehfest verbunden werden kann. Die Festräder und Losräder der Nebengänge liegen dabei in einem axialen Bereich des Schaltgetriebes, der über ein abtriebsseitiges Ende der ersten Vorgelegewelle hinausgeht, wobei die motorseitige Zahnradpaarung und die weitere Zahnradpaarung axial direkt nebeneinander liegen. Im Zugbetrieb des Schaltgetriebes lässt sich beispielsweise bei einem eingelegten Nebengang ein Drehmoment der E-Maschine über das Planetenradgetriebe, die zweite Eingangswelle, die motorseitige Zahnradpaarung, die zweite Vorgelegewelle und über das Losrad und das Festrad des eingelegten Nebengangs auf die Ausgangswelle und somit auf den Abtrieb übertragen. Über diesen Drehmomentpfad lässt sich das Kraftfahrzeug elektrisch antreiben. Über die Hauptgänge ist ein motorischer Betrieb des Kraftfahrzeugs möglich. Weitere Drehmomentpfade bzw. weitere Gänge lassen sich durch unterschiedliche Schaltzustände des Planetenradgetriebes oder durch eine drehfeste Verbindung von erster und zweiter Eingangswelle realisieren.

Die DE 199 60 621 A1 und die DE 10 2011 089 466 A1 offenbaren Hybrid-Antriebsbaugruppen mit einem Schaltgetriebe, das dem Schaltgetriebe der EP 2 655 111 B1 im grundsätzlichen Aufbau ähnelt und bei dem die motorseitige Zahnradpaarung und die weitere Zahnradpaarung ebenfalls axial direkt nebeneinander liegen.

Gleichwohl der oben beschriebene Aufbau der Hybrid-Antriebsbaugruppe grundsätzlich eine kompakte Bauform mit vielen unterschiedlichen Gängen aufweist, besteht ein Bedarf an einer kompakt-bauenden Hybrid-Antriebsbaugruppe, die einen hohen Fahrkomfort und deren grundsätzlicher Aufbau in einfacher Weise Erweiterungen oder Varianten ermöglichen.

Die der Erfindung zu Grunde liegende Aufgabe wird mit der Merkmalskombination gemäß Anspruch 1 gelöst. Ausführungsbeispiele können den Unteransprüchen entnommen werden.

Erfindungsgemäß ist vorgesehen, dass wenigstens eine abtriebsseitige Zahnradpaarung mit einem auf der ersten Vorgelegewelle angeordneten Abtriebszwischenrad und einem damit kämmenden Abtriebsrad vorgesehen ist. Die Festräder und Losräder der Hauptgänge sind dabei in einem axialen Bereich des Schaltgetriebes zwischen dem ersten Antriebszwischenrad und dem Abtriebszwischenrad angeordnet. Im Zugbetrieb wird bei einem eingelegten Hauptgang das Drehmoment von der ersten Eingangswelle auf die erste Vorgelegewelle und dort aus über die abtriebsseitige Zahnradpaarung auf die Ausgangswelle übertragen. Durch die motorseitige Zahnradpaarung und die abtriebsseitige Zahnradpaarung weist das Schaltgetriebe ein konstruktives Grundgerüst auf, das eine kompakte Bauweise der Hybrid-Antriebsgruppe und viele Gänge für einen hohen Fahrkomfort ermöglicht.

Das Antriebsrad und das Antriebszwischenrad der motorseitigen Zahnradpaarung können jeweils als Festräder ausgebildet sein. In diesem Fall sitzt das Antriebsrad unabhängig von diversen Schaltzuständen drehfest auf der zweiten Eingangswelle. Das mit dem Antriebsrad kämmende Antriebszwischenrad sitzt drehfest auf der zweiten Vorgelegewelle. Die motorseitige Zahnradpaarung kann dann auch als Eingangskonstante bezeichnet werden, da deren Übersetzungsverhältnis konstant ist. Das Übersetzungsverhältnis der Eingangskonstante (Drehzahl der zweiten Eingangswelle / Drehzahl der zweiten Vorgelegewelle) nimmt vorzugsweise Werte größer 1 an. Die durch den Rotor der E-Maschine angetriebene zweite Eingangswelle führt dann zu kleineren Drehzahlen der zweiten Vorgelegewelle. Das (Gesamt-)Übersetzungsverhältnis eines jeden Nebengangs hängt von dieser Eingangskonstante ab. Grundsätzlich ermöglicht daher die Eingangskonstante mit einem Übersetzungsverhältnis größer 1 Nebengänge mit großen Übersetzungsverhältnissen.

Das Antriebszwischenrad kann an einem motorseitigen Ende der zweiten Vorgelegewelle angeordnet sein. Dies bedeutet, dass an diesem Ende das Antriebszwischenrad, abgesehen von Bauteilen zu Lagerung der Welle, das äußerste Bauteil auf der Welle darstellt.

Das Abtriebszwischenrad kann als drehfest auf der ersten Vorgelegewelle angeordnetes Festrad ausgebildet sein. Das mit dem Abtriebszwischenrad kämmende Abtriebsrad kann ebenfalls ein Festrad sein, das drehfest mit der Ausgangswelle verbunden ist. In diesem Fall kann die abtriebsseitige Zahnradpaarung als Abtriebskonstante bezeichnet werden, deren Übersetzungsverhältnis größer 1 sein kann (Drehzahl der ersten Vorgelegewelle / Drehzahl der Ausgangswelle). Mit der Abtriebskonstante kann Einfluss genommen werden auf die (Gesamt-)Übersetzung der Hauptgänge.

Alternativ zum Ausführungsbeispiel des obigen Abschnitts kann das Abtriebsrad auch als schaltbares Losrad ausgebildet sein, das nur im entsprechenden Schaltzustand drehfest mit der Ausgangswelle verbunden ist. Dies eröffnet die Möglichkeit, eine weitere abtriebsseitige Zahnradpaarung vorzusehen, die ein weiteres Abtriebsrad und ein damit kämmendes weiteres Abtriebszwischenrad aufweist. Das weitere Abtriebszwischenrad sitzt, vorzugsweise als Festrad ausgebildet, auf der ersten Vorgelegewelle, während das weitere Abtriebrad koaxial zur Ausgangswelle angeordnet ist und vorzugsweise ein schaltbares Losrad darstellt, das sich drehfest mit der Ausgangswelle verbinden lässt. Es ist auch möglich, dass das Abtriebszwischenrad und/oder das weitere Abtriebszwischenrad als Losrad ausgebildet sind.

In dem Ausführungsbeispiel, in dem das Abtriebsrad und das weitere Abtriebsrad jeweils als Losräder ausgebildet sind, kann zwischen diesen Abtriebsrädern eine Doppelgangschaltkupplung angeordnet sein, die wahlweise entweder das Abtriebsrad oder das weitere Abtriebsrad drehfest mit der Ausgangswelle verbindet. Durch diese schaltbaren Zahnradpaarungen lässt sich die Anzahl der Hauptgänge des Schaltgetriebes gegenüber einer Variante mit nur einer Abtriebskonstanten verdoppeln.

Unabhängig davon, ob es sich um eine nicht schaltbare abtriebsseitige Zahnradpaarung, eine schaltbare abtriebsseitige Zahnradpaarung oder um zwei schaltbare abtriebsseitige Zahnradpaarungen handelt, lässt sich über die Wahl der Durchmesser von Abtriebszwischenrad und Abtriebsrad das (Gesamt-)Übersetzungsverhältnis eines jeden Hauptgangs beeinflussen. Somit gilt für alle Hauptgänge, das deren jeweiliges (Gesamt-)Übersetzungsverhältnis von dem Übersetzungsverhältnis der vorliegenden bzw. geschalteten abtriebsseitigen Zahnradpaarung abhängt.

Bei einem eingelegten Hauptgang soll der Drehmomentfluss im Zugbetrieb von der ersten Eingangswelle über die erste Vorgelegewelle und über die abtriebsseitige Zahnradpaarung (oder über die weitere Zahnradpaarung) auf die Ausgangswelle erfolgen, wobei die zweite Eingangswelle und die Vorgelegewelle grundsätzlich lastfrei gestellt sind. Bei einem eingelegten Nebengang hingegen soll der Drehmomentfluss im Zugbetrieb von der zweiten Eingangswelle über die motorseitige Zahnradpaarung auf die zweite Vorgelegewelle und von dort auf die Ausgangswelle erfolgen, während die erste Eingangswelle und die erste Vorgelegewelle grundsätzlich lastfrei gestellt werden. Ein etwaiger Direktgang, bei dem die erste Eingangswelle drehfest mit der Ausgangswelle verbunden wird, wird im engeren Sinne nicht zu den Hauptgängen gezählt, da beim eingelegten Direktgang kein Drehmomentfluss über die erste Vorgelegewelle erfolgt.

Auch sei darauf hingewiesen, dass das Kraftfahrzeug gleichzeitig von dem Verbrennungsmotor und der E-Maschine angetrieben werden kann. In diesem Fall können einer der Hauptgänge und einer der Nebengänge gleichzeitig eingelegt sein, sodass an der Ausgangswelle dann ein entsprechend großes Drehmoment zur Verfügung steht.

Das Abtriebszwischenrad ist an dem abtriebsseitigen Ende der ersten Vorgelegewelle angeordnet. Es stellt somit, abgesehen von Lagerbauteilen, das äußerste Bauteil an diesem Ende der ersten Vorgelegewelle dar.

In einem Ausführungsbeispiel ist eine Drehmomentübertragungseinheit vorgesehen ist, durch die ein Drehmoment des Verbrennungsmotors von der ersten Eingangswelle auf die zweite Eingangswelle übertragbar ist. Die Drehmomentübertragungseinheit kann koaxial zur Eingangswelle angeordnet ist. Vorzugsweise ist die Drehmomentübertragungseinheit als eine Reibkupplung ausgeführt.

Durch die Drehmomentübertragungseinheit ist es möglich, über einen eingelegten Nebengang das Kraftfahrzeug auch über den Verbrennungsmotor anzutreiben. Das Drehmoment des Verbrennungsmotors wird dabei von der ersten Eingangswelle auf die zweite Eingangswelle übertragen. Auch kann in einem Ausführungsbeispiel ein Drehmoment der E-Maschine von der zweiten Eingangswelle auf die erste Eingangswelle übertragen werden. So kann die E-Maschine als Starter für den Verbrennungsmotor fungieren. Bei einem eingelegten Hauptgang kann die E-Maschine allein oder als Unterstützung zum Verbrennungsmotor das Kraftfahrzeug antreiben.

Zudem kann die Hybrid-Antriebsbaugruppe eine Steuerung umfassen, durch die eine Drehmomentlücke beim Schalten zwischen zwei Hauptgängen vorzugsweise vollständig aufgefüllt wird. Die Steuerung ist dabei so ausgelegt, dass vor dem Schaltvorgang bei einem eingelegten Start-Hauptgang eine Übertragungskapazität der Drehmomentübertragungseinheit soweit erhöht wird, dass das Drehmoment des Verbrennungsmotors vollständig von der ersten Eingangswelle auf die zweite Eingangswelle übertragen wird. Dazu kann ein Nebengang eingelegt sein, dessen Übersetzungsverhältnis größer als das Übersetzungsverhältnis des Start-Hauptgangs und eines Ziel-Hauptgangs ist. Dies hat zur Folge, dass die erste Vorgelegewelle und somit das Teilgetriebe mit den Hauptgängen lastfrei gestellt wird. Zusätzlich zum Drehmoment des Verbrennungsmotors wirkt auf die zweite Eingangswelle das Drehmoment der E-Maschine.

Durch die Steuerung werden nun bei lastfrei gestellter ersten Vorgelegewelle der Start-Hauptgang ausgelegt und der Ziel-Hauptgang eingelegt. Nach Einlegung des Ziel-Hauptgangs werden die Übertragungskapazität der Drehmomentübertragungseinheit und das Drehmoment der E-Maschine wieder reduziert. Das Drehmoment des Verbrennungsmotors läuft nun wieder vollständig über das erste Teilgetriebe.

Zur drehfesten Verbindung zwischen erster Vorgelegewelle und der zweiten Vorgelegewelle kann eine Koppeleinheit vorgesehen sein, die als Schaltkupplung ausgebildet sein kann. Vorzugsweise ist die Schaltkupplung koaxial zu den Vorgelegewellen angeordnet. Durch die Koppeleinheit können weitere Gänge realisiert werden. Beispielsweise kann dadurch zusätzlich zu den Hauptgängen ein Anfahrgang geschaffen werden: Die E-Maschine treibt dabei über die motorseitige Zahnradpaarung die zweite Vorgelegewelle an, von der das Drehmoment über die schaltbare Koppeleinheit auf die erste Vorgelegewelle übertragen wird. Der weitere Drehmomentfluss erfolgt nun über die abtriebsseitige Zahnradpaarung auf die Ausgangswelle. Soweit eine Drehmomentübertragungseinheit zwischen erster und zweiter Eingangswelle vorgesehen ist, kann das Anfahren über diesen Anfahrgang alternativ oder zusätzlich mit Hilfe des Verbrennungsmotors geschehen.

Die Koppeleinheit bzw. die Schaltkupplung kann Teil einer Doppelgangschaltkupplung sein, wobei in einer ersten Schaltstellung die erste Vorgelegewelle mit der zweiten Vorgelegewelle drehfest verbunden ist und in einer zweiten Schaltstellung einer der Hauptgänge eingelegt ist. Vorzugsweise ist in der zweiten Schaltstellung der Hauptgang eingelegt, der unter den Hauptgängen das größte Übersetzungsverhältnis hat.

Einer der Nebengänge kann als mechanischer Rückwärtsgang ausgeführt sein, sodass das Kraftfahrzeug nur durch den Verbrennungsmotor rückwärtsfahren kann. Für die erforderliche Richtungsumkehr im Schaltgetriebe kann eine Zwischenwelle mit Zwischenrad vorgesehen sein, das mit einem Zahnrad auf der zweiten Vorgelegewelle und mit einem Zahnrad auf der Ausgangswelle im kämmenden Eingriff steht. Das Zwischenrad kann dabei als Festrad aufgefasst werden, das dem Rückwärtsgang zugeordnet ist.

Anhand der in der Zeichnung dargestellten Ausführungsbeispiele wird die Erfindung näher erläutert. Es zeigen:
- Figur 1: ein erstes Ausführungsbeispiel;
- Figur 2: ein zweites Ausführungsbeispiel;
- Figur 3: ein drittes Ausführungsbeispiel;
- Figur 4: ein viertes Ausführungsbeispiel; und
- Figur 5: ein fünftes Ausführungsbeispiel;

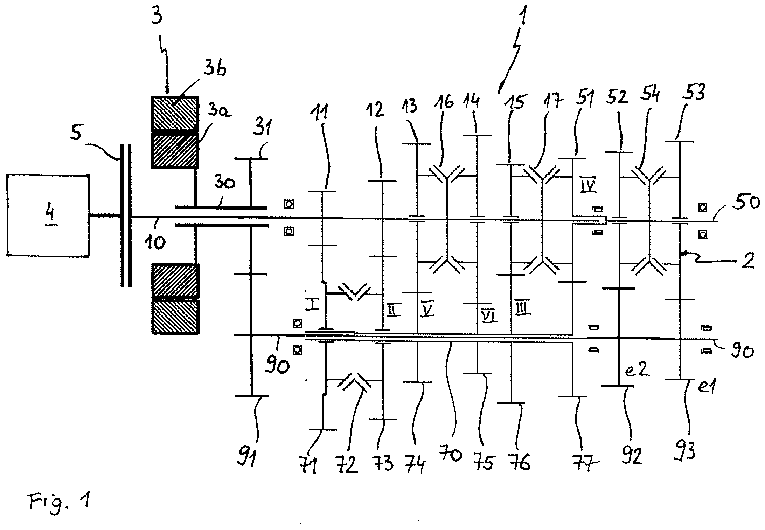

Figur 1 zeigt eine Hybrid-Antriebsbaugruppe, die in ihrer Gesamtheit mit 1 bezeichnet wird. Die Hybrid-Antriebsbaugruppe 1 weist ein Schaltgetriebe 2 und eine E-Maschine 3 mit einem Rotor 3a und einem Stator 3b auf.

Das Schaltgetriebe 2 umfasst eine erste Eingangswelle 10, die mit einem Verbrennungsmotor 4 verbunden ist. Zwischen Verbrennungsmotor 4 und Eingangswelle 10 des Schaltgetriebes 2 ist eine Trennkupplung 5 vorgesehen. Der Rotor 3a ist koaxial zur ersten Eingangswelle 10 angeordnet. Zumindest Teile des Rotors 3a und des Stators 3b können in einer Kupplungsglocke der Kupplung 5 untergebracht sein. Die E-Maschine 3 befindet sich an einer Motorseite der Hybrid-Antriebsbaugruppe 1.

Koaxial zur ersten Eingangswelle 10 ist eine zweite Eingangswelle 30 angeordnet. Die erste Eingangswelle 10 ist als Voll- oder Innenwelle, die zweite Eingangswelle 30 ist als Hohlwelle ausgebildet. Eine Ausgangswelle 50 ist koaxial zur ersten Eingangswelle 10 angeordnet und schließt sich in axialer Richtung des Schaltgetriebes 2 gesehen an die erste Eingangswelle 10 an. Die Ausgangswelle 50 befindet sich an einer Abtriebsseite der Hybrid-Antriebsbaugruppe 1. Die Hybrid-Antriebsbaugruppe 1 eignet sich für ein Kraftfahrzeug mit Hinterradantrieb, wobei der Verbrennungsmotor 4 und die Hybrid-Antriebsbaugruppe 1 längs zur Fahrtrichtung eingebaut werden. In Einbaulage ist die Ausgangswelle 30 mit einem Abtrieb verbunden, beispielsweise mit einer Kardanwelle und einem Hinterraddifferenzial.

Parallel zu den koaxialen Wellen 10, 30, 50 sind eine erste Vorgelegewelle 70 und eine zweite Vorgelegewelle 90 angeordnet. Die Vorgelegewellen 70, 90 sind koaxial zueinander angeordnet, wobei die erste Vorgelegewelle 70 als Hohlwelle die als Vollwelle ausgebildete zweiten Vorgelegewelle 90 umschließt. Die zweite Vorgelegewelle 90 überragt die erste Vorgelegewelle 70 axial zu beiden Seiten.

Auf der zweiten Eingangswelle 30 sitzt ein Antriebsrad 31, das mit einem Antriebszwischenrad 91 auf der zweiten Vorgelegewelle 90 kämmt. Das Antriebsrad 31 und das Antriebszwischenrad 91 sind jeweils als Festräder ausgebildet und bilden eine motorseitige Zahnradpaarung. Das Antriebszwischenrad 91 ist an einem motorseitigen Ende der zweiten Vorgelegewelle 90 angeordnet. Es stellt somit das Zahnrad auf der zweiten Vorgelegewelle 90 dar, das in axialer Richtung gesehen dem Verbrennungsmotor 4 am nächsten ist.

Auf der ersten Eingangswelle sind zwei Festräder 11, 12 sowie drei Losräder 13, 14 und 15 angeordnet. Das Festrad 11 kämmt mit einem Losrad 71 auf der ersten Vorgelegewelle 70. Das Festrad 11 und das Losrad 71 können einem ersten Hauptgang I zugeordnet werden. Befindet sich eine auf der ersten Vorgelegewelle sitzende Doppelgangschaltkupplung 72 in einer ersten Schaltstellung (eine entsprechende Schiebemuffe der Doppelgangschaltkuppung 72 befindet sich dann in Darstellung der Figur 1 in einer linken Endposition), ist der erste Hauptgang I eingelegt. Das Festrad 12 auf der ersten Eingangswelle 10 kämmt mit einem Losrad 73 auf der ersten Vorgelegewelle. Die Räder 12, 73 können einem zweiten Hauptgang II zugeordnet werden. Weitere Festräder 74, 75, 76 auf der ersten Vorgelegewelle 70 kämmen mit den Losrädern 13, 14 und 15. Eine Doppelgangschaltkupplung 16 dient dazu, wahlweise das Losrad 13 oder das Losrad 14 drehfest mit der ersten Eingangswelle 10 zu verbinden. Entsprechend lassen sich ein fünfter Hauptgang V und ein sechster Hauptgang VI realisieren. Durch eine weitere Doppelgangschaltkupplung 17 auf der ersten Eingangswelle 10 lässt sich ein dritter Hauptgang III und ein Direktgang IV einlegen. Bei eingelegtem Direktgang IV verbindet die Gangschaltkupplung 17 die erste Eingangswelle 10 drehfest mit einem Festrad 51 auf der Ausgangswelle 50. Erste Eingangswelle 10 und Ausgangswelle 50 rotieren dann mit gleicher Drehzahl.

Über den ersten eingelegten Hauptgang I lässt sich ein Drehmoment des Verbrennungsmotors 4 zur Ausgangswelle 50 übertragen. Das Drehmoment fließt dabei über die erste Eingangswelle 10, das Festrad 11, das Losrad 71 und die Doppelgangschaltkupplung 72 auf die erste Vorgelegewelle 70. Da an einem abtriebsseitigen Ende der ersten Vorgelegewelle ein Abtriebszwischenrad 77 vorgesehen ist, das mit dem Festrad 51 der Ausgangswelle 50 kämmt, wird das Drehmoment des Verbrennungsmotors 4 auf die Ausgangswelle 50 übertragen. Das Antriebszwischenrad 77 und das Festrad 51 bilden eine abtriebsseitige Zahnradpaarung. Das Festrad 51 kann auch als Abtriebsrad bezeichnet werden.

Der Drehmomentfluss bei den anderen Hauptgängen II, III, V und VI entspricht im Wesentlichen dem Drehmomentfluss des ersten Hauptgangs I. Er erfolgt jeweils über die erste Vorgelegewelle 70 und die abtriebsseitige Zahnradpaarung mit dem Abtriebszwischenrad 77 und dem Abtriebsrad 51. Das Verhältnis der Durchmesser von Antriebsrad 51 und Antriebszwischenrad 7 hat somit Einfluss auf die jeweiligen Übersetzungsverhältnisse der Hauptgänge. Bei einem eingelegten Hauptgang lässt sich ein Drehmoment des Verbrennungsmotors 4 auf die Ausgangswelle 50 übertragen, ohne dass dafür die zweite Vorgelegewelle bzw. die motorseitige Zahnradpaarung unter Last steht. Die Hauptgänge bilden ein erstes Teilgetriebe, durch das ein Drehmomentfluss in folgender Weise möglich ist: Erste Eingangswelle, eingelegter Hauptgang, erste Vorgelegewelle, abtriebsseitige Zahnradpaarung, Ausgangswelle.

Auf der Ausgangswelle 50 sind zwei Losräder 52, 53 angeordnet, die sich durch eine dazwischen liegende Doppelgangschaltkupplung 54 drehfest mit der Ausgangswelle 50 verbinden lassen. Das Losrad 52 bzw. das Losrad 53 steht im kämmenden Eingriff mit einem Festrad 92 bzw. mit einem Festrad 93 auf der zweiten Vorgelegewelle 90. Ist das Losrad 53 drehfest mit der Ausgangswelle 50 verbunden, ist ein erster Nebengang e1 eingelegt. Bei drehfest verbundenem Losrad 52 hingegen ist ein zweiter Nebengang e2 eingelegt. Wenn beispielsweise der erste Nebengang e1 eingelegt ist, lässt sich ein Drehmoment der E-Maschine über den folgenden Pfad auf die Ausgangswelle übertragen: zweite Eingangswelle 30, motorseitige Zahnradpaarung mit den Rädern 31, 91, zweite Vorgelegewelle 90, Festrad 93 und geschaltetes Losrad 53. Über diesen Pfad ist ein rein elektrischer Antrieb des Kraftfahrzeugs möglich. Die Nebengänge e1 und e2 können daher auch als elektrische Gänge/Nebengänge bezeichnet werden. Die elektrischen Nebengänge können dabei einem zweiten Teilgetriebe zugeordnet werden, die ein Drehmomentfluss durch das Schaltgetriebe 2 ermöglichen, ohne dass dabei die erste Eingangswelle 30 bzw. die zweite Vorgelegewelle 90 unter Last steht.

Zur Realisierung eines Rückwärtsgangs kann der erste Nebengang e1 verwendet werden. Dabei muss die E-Maschine 3 so angesteuert werden, dass der Rotor 3a in eine zur gewöhnlichen Drehrichtung entgegengesetzte Drehrichtung dreht.

Die Losräder 52, 53 und die Festräder 92, 93 der Nebengänge e1 und e2 liegen in einem axialen Bereich des Schaltgetriebes 2, der über das abtriebsseitige Ende der ersten Vorgelegewelle 70 hinausgeht. In der Darstellung der Figur 1 liegen die Losräder 52, 53 und die Festräder 92, 93 rechts von dem Abtriebszwischenrad 77, das an dem antriebsseitigen Ende der ersten Vorgelegewelle 70 angeordnet ist. Links davon erstreckt sich die erste Vorgelegewelle 70 bis zu einem motorseitigen Ende, an dem das Antriebszwischenrad 71 angeordnet ist. Die Festräder 11, 12, 74, 75 und 76 und die Losräder 71, 73, 13, 14, und 15 der Hauptgänge liegen axial zwischen der Ebene des Antriebszwischenrads 91 und der Ebene des Abtriebszwischenrads 77.

Es sei darauf hingewiesen, dass die Festräder und Losräder aller Hauptgänge zwischen der Ebene des Antriebszwischenrads 91 und der Ebene des Abtriebszwischenrads 77 liegen. Es gibt keinen Hauptgang, dessen Losrad und Festrad nicht axial zwischen der Ebene des Antriebszwischenrads 91 und der Ebene des Abtriebszwischenrads 77 liegen.

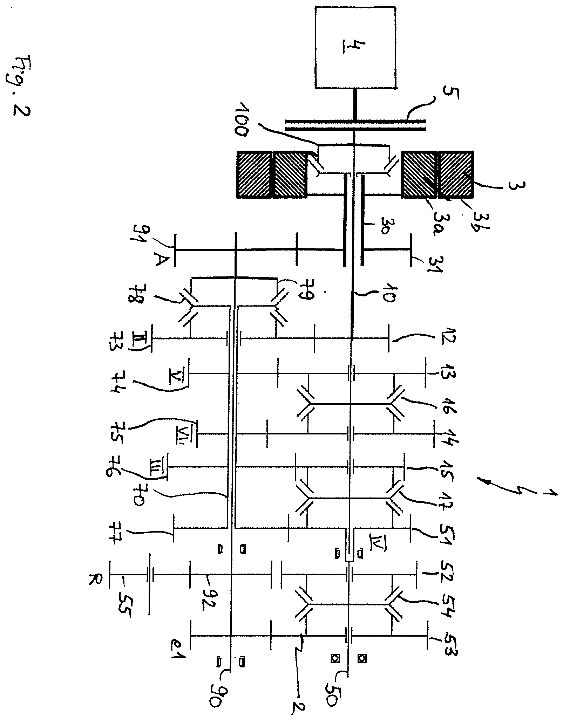

Figur 2 zeigt ein zweites Ausführungsbeispiel für die erfindungsgemäße Hybrid-Antriebsbaugruppe 1. Bauteile und Merkmale, die zu den Bauteilen und Merkmalen des Ausführungsbeispiels von Figur 1 identisch oder ähnlich sind, werden mit den gleichen Bezugszeichen versehen. Dies gilt sinngemäß auch für alle weiteren Figuren. Bei der Figurenbeschreibung der Figur 2 und der weiteren Figuren werden insbesondere die Unterschiede zu Figur 1 bzw. zu den bereits beschriebenen Figuren beschrieben.

Beim Ausführungsbeispiel der Figur 2 ist in axialer Richtung gesehen zwischen dem Verbrennungsmotor 4 und der motorseitigen Zahnradpaarung (siehe Antriebsrad 31 und dem Antriebszwischenrad 91) eine Drehmomentübertragungseinheit 100 vorgesehen, durch die ein Drehmoment von der ersten Eingangswelle 10 auf die zweite Eingangswelle 30 übertragen werden kann. Auch ist dadurch eine Drehmomentübertragung von der zweiten Eingangswelle 30 auf die erste Eingangswelle 10 möglich. Die Drehmomentübertragungseinheit 100 kann beispielsweise als Reibkupplung ausgeführt sein.

Die Drehmomentübertragungseinheit, oder im Folgenden, die Reibkupplung 100, kann in einem hohlzylindrischen Raum angeordnet sein, der durch den Rotor 3a der E-Maschine 3 in radialer Richtung umschlossen wird. Dadurch ist eine platzsparende Unterbringung der Reibkupplung 100 möglich. Die Reibkupplung 100 ist koaxial zu der ersten Eingangswelle angeordnet.

Neben der gegebenen Anbindung an die Ausgangswelle 50 ermöglich die Reibkupplung 100 eine Anbindung der E-Maschine 3 an die erste Eingangswelle 10. Das Ausführungsbeispiel der Figur 2 zeigt also eine Hybrid-Antriebsbaugruppe mit P2- und P3-Anbindung der E-Maschine 3. Bei geschlossener Reibkupplung 100 und bei geöffneter Trennkupplung 4 können somit die Hauptgänge II, III, V und VI sowie der Direktgang IV rein elektrisch betrieben werden. Ist beispielsweise der zweite Hauptgang II eingelegt, erfolgt der Drehmomentfluss von der E-Maschine 3 und der zweiten Eingangswelle 30 auf die erste Eingangswelle 10. Von dort aus gelangt, wie für Figur 1 bereits geschrieben, das Drehmoment über die Zahnräder 12, 73, die erste Vorgelegewelle 70 und die abtriebsseitige Zahnradpaarung (siehe Abtriebszwischenrad 77 und Abtriebsrad 51) auf die Ausgangswelle 50.

Anstatt der Doppelgangschaltkupplung 72, die im Ausführungsbeispiel der Figur 1 der drehfesten Verbindung der dort mit 71 und 73 bezeichneten Losräder mit der ersten Vorgelegewelle 30 dient, ist im Ausführungsbeispiel der Figur 2 eine Doppelgangschaltkupplung 78 vorgesehen, die in einer ersten Schaltstellung die beiden Vorgelegewellen 70, 90 drehfest verbindet. Durch die entsprechend geschaltete Doppelgangschaltkupplung 78 lässt sich ein Anfahrgang A realisieren, dessen Übersetzungsverhältnis (Drehzahl n₁₀ der ersten Eingangswelle 10 zu Drehzahl n₅₀ der Ausgangswelle 50) größer ist als das Übersetzungsverhältnis des zweiten Hauptgangs II, wobei bei den Gängen A; II das Drehmoment über die Abtriebskonstante zur Ausgangswelle geführt wird. Der Anfahrgang A soll im Sinne der Erfindung keinen Hauptgang darstellen, da die zweite Vorgelegewelle 90 im Zugbetrieb unter Last steht. Der Anfahrgang A kann rein elektrisch, rein motorisch oder auch durch Verbrennungsmotor 4 und E-Maschine 3 gleichzeitig angetrieben werden. Bei Mitwirkung durch den Verbrennungsmotor 4 muss die Reibkupplung 100 geschlossen sein.

Befindet sich die Doppelgangschaltkupplung 78 in einer zweiten Schaltstellung, ist das Losrad 73 drehfest mit der ersten Vorgelegewelle 70 verbunden. Wie auch im Ausführungsbeispiel der Figur 2 ist dann ein Hauptgang eingelegt, bei dem es sich wie in Figur 1 um den zweiten Hauptgang II handeln soll, auch wenn es keinen Hauptgang gibt, der ein größeres Übersetzungsverhältnis aufweist.

Wenn die Doppelgangschaltkupplung 16 sich in einer ersten Schaltstellung befindet, ist das Losrad 13 drehfest mit der ersten Eingangswelle verbunden. Der fünfte Hauptgang V ist dann eingelegt. In der zweiten Schaltstellung ist der sechste Hauptgang VI eingelegt.

Die drehfeste Verbindung zwischen erster Vorgelegewelle 70 und zweiter Vorgelegewelle 90 kann auf beliebige Weise erfolgen und ist nicht auch die hier dargestellte Doppelgangschaltkupplung 78 beschränkt. Daher ist ein Teil der Doppelgangschaltkupplung 78 zusätzlich mit dem Bezugszeichen 79 versehen, das allgemein eine Koppeleinheit zwischen den beiden Vorgelegewellen kennzeichnen soll.

Der Nebengang e2 in Figur 2 ist als mechanischer Rückwärtsgang ausgebildet. Ein Zwischenrad 55, das mit dem Festrad 92 und dem Losrad 52 kämmt, sorgt für die erforderliche Drehrichtungsumkehr. Das Zwischenrad 55 liegt dabei in der Ebene von Festrad 92 und Losrad 52. Diese Ebene ist hier direkt benachbart zu dem Abtriebszwischenrad 77, dh. zwischen dem Abtriebszwischenrad 77 und dem Festrad 92 ist kein weiteres Bauteil zur Drehmomentübertragung vorgesehen.

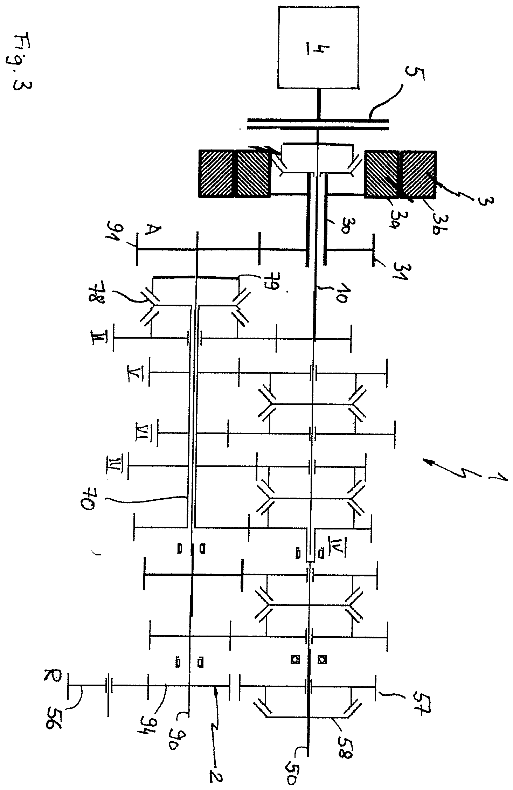

Das Ausführungsbeispiel der Figur 3 weist zusätzlich zu den Nebengänge e1, e2 eine weitere Zahnradebene auf, um den mechanischen Rückwärtsgang R zu realisieren. Dafür ist auf der zweiten Vorgelegewelle 90 ein weiteres Festrad 94 angeordnet, das mit einem Zwischenrad 56 kämmt. Das Zwischenrad 56 kämmt wiederum mit einem Losrad 57 auf der Ausgangswelle 50, das sich mit einer Gangschaltkupplung 58 mit dieser drehfest verbinden lässt.

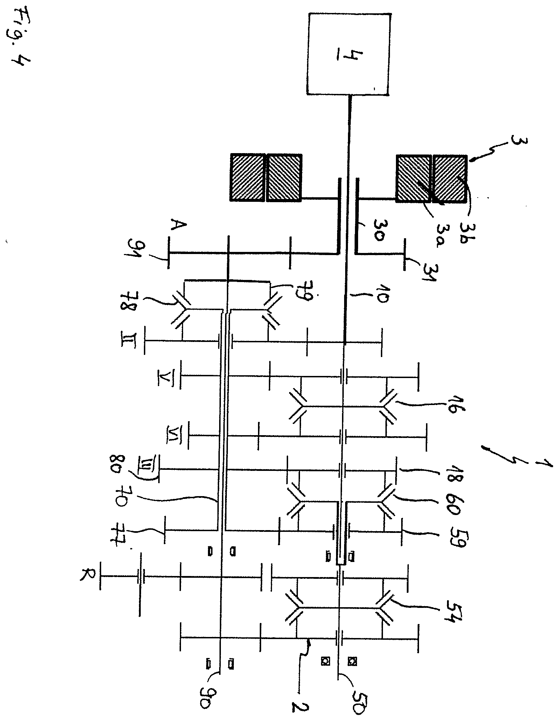

Figur 4 zeigt ein Ausführungsbeispiel der Erfindung, bei dem neben der abtriebsseitigen Zahnradpaarung eine weitere abtriebsseitige Zahnradpaarung vorgesehen ist. Die abtriebsseitige Zahnradpaarung weist das Abtriebszwischenrad 77 und, im Gegensatz zu den Ausführungsbeispielen der Figuren 1 bis 3, ein Abtriebsrad in Form eines Losrads 59 auf, das sich mit einer Doppelgangschaltkupplung 60 drehfest mit der Ausgangswelle 50 verbinden lässt. Die weitere Zahnradpaarung weist ein weiteres Abtriebszwischenrad 80 und ein weiteres Abtriebsrad 18 als Losrad auf, das sich durch die Doppelgangschaltkupplung 60 drehfest mit der Ausgangswelle 50 verbinden lässt. Durch diese schaltbaren abtriebsseitigen Zahnradpaarungen lässt sich die Anzahl der Hauptgänge im Getriebe erhöhen, da bei beispielsweise eingelegtem zweiten Hauptgang II das Drehmoment wahlweise über eine der beiden abtriebsseitigen Zahnradpaarungen geleitet werden kann.

Auf Basis beispielsweise des fünften Hauptgangs V lässt sich im Schaltgetriebe 2 ein zusätzlicher Gang realisieren, wenn die Doppelgangschaltkupplung 78 sich in der ersten Schaltstellung befindet, wenn also die Vorgelegewellen 70, 90 als gemeinsamer Block rotieren. Das Übersetzungsverhältnis dieses zusätzlichen Gangs entspricht dem Übersetzungsverhältnis des fünften Hauptgangs V multipliziert mit dem Übersetzungsverhältnis der Zahnräder 92, 52 (Rückwärtsgang R) oder der Zahnräder 93, 53 (Nebengang e1). Entsprechendes gilt für die Hauptgänge III und VI, auf deren Basis weitere zusätzliche Gänge realisiert werden können. Die Doppelgangschaltkupplung 60 ist bei Realisierung dieser zusätzlichen Gänge auf neutral geschaltet, dh. weder das Losrad 18 noch das Losrad 59 sind drehfest mit der Ausgangswelle 50 verbunden.

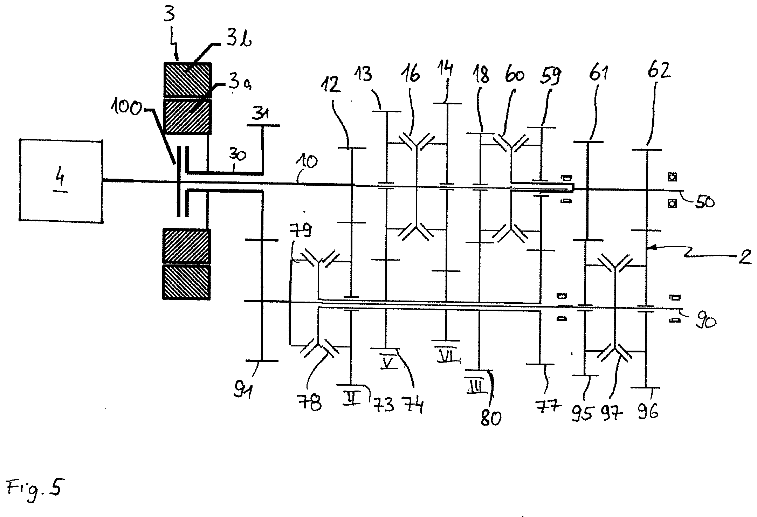

Figur 5 zeigt ein Ausführungsbeispiel, das ebenfalls die beiden schaltbaren Zahnradpaarungen mit der dazwischen angeordneten Doppelgangschaltkupplung 60 aufweist. Im Gegensatz zum Ausführungsbeispiel der Figuren 1 und 4 sind die Losräder der Nebengänge e1 und e2 nicht auf der Ausgangswelle 50, sondern auf der zweiten Vorgelegewelle 90 angeordnet. Sie werden in Figur 5 mit den Bezugszeichen 95 und 96 bezeichnet. Zwischen diesen Losrädern 95, 96 ist eine Doppelgangschaltkupplung 97 zur wahlweisen drehfesten Verbindung mit der zweiten Vorgelegewelle 90 angeordnet. Das Losrad 95 bzw. das Losrad 96 kämmt mit einem Festrad 61 bzw. mit einem Festrad 62 auf der Ausgangswelle 50. Das Ausführungsbeispiel der Figur 5 zeichnet sich durch einen ausgewogenen Radsatz aus, bei dem zwei Doppelgangschaltkupplungen 16, 60 koaxial zu den Eingangswelle 10, 30 bzw. zur Ausgangswelle 50 und zwei Doppelgangschaltkupplungen 78, 97 koaxial zu den Vorgelegewellen 70, 90 angeordnet sind. Wie aus Figur 5 zu entnehmen, kann es sich um jeweils genau zwei Doppelgangschaltkupplungen (weitere Gangschaltkupplungen sind rechts der motorseitigen Zahnradpaarung nicht vorgesehen) handeln. Die Doppelgangschaltkupplungen 16, 61 aud den Wellen 10, 30, 50 werden von den Doppelgangschaltkupplungen 78, 97 der Wellen 70, 90 in axialer Richtung umschlossen.

Das Ausführungsbeispiel der Figur 5 weist auch die Koppeleinheit 79 als Teil einer Doppelgangschaltkupplung auf, um die beiden Vorgelegewellen 70, 90 miteinander zu verbinden. Ein mechanischer Rückwärtsgang könnte auch hier vorgesehen sein, auf ihn wurde aber zum Zwecke einer kompakten Bauform verzichtet. Ein Rückwärtsfahren des Kraftfahrzeugs erfolgt, wie bereits in Zusammenhang mit Figur 1 beschrieben, durch eine Umkehr der Drehrichtung des Rotors 3a.

Im Gegensatz zum Ausführungsbeispiel der Figur 2 wird von dem Einsatz einer Trennkupplung 5 zwischen Verbrennungsmotor 4 und erster Eingangswelle 10 abgesehen, was die Kompaktheit der Hybrid-Antriebsbaugruppe 1 erhöht. Bei Bedarf kann aber die Trennkupplung 5 vorgesehen sein.

### Bezugszeichenliste

- 1: Hybrid-Antriebsbaugruppe
- 2: Schaltgetriebs
- 3: E-Maschine mit Rotor 3a und Stator 3b
- 4: Verbrennungsmotor
- 5: Trennkupplung

- 10: Erste Eingangswelle
- 11: Festrad
- 12: Festrad
- 13: Losrad
- 14: Losrad
- 15: Losrad
- 16: Doppelgangschaltkupplung
- 17: Doppelgangschaltkupplung
- 18: weiteres Abtriebsrad / Losrad

- 30: Zweite Eingangswelle
- 31: Antriebsrad

- 50: Ausgangswelle
- 51: Festrad/Abtriebsrad
- 52: Losrad
- 53: Losrad
- 54: Doppelgangschaltkupplung
- 55: Zwischenrad / Festrad
- 56: Zwischenrad
- 57: Losrad
- 58: Gangschaltkupplung
- 59: Abtriebsrad/Losrad
- 60: Doppelgangschaltkupplung
- 61: Festrad
- 62: Festrad

- 70: Erste Vorgelegewelle
- 71: Losrad
- 72: Doppelgangschaltkupplung
- 73: Losrad
- 74: Festrad
- 75: Festrad
- 76: Festrad
- 77: Abtriebszwischenrad
- 78: Doppelgangschaltkupplung
- 79: Koppeleinheit
- 80: weiteres Abtriebszwischenrad

- 90: Zweite Vorgelegewelle
- 91: Antriesbszwischenrad
- 92: Festrad
- 93: Festrad
- 94: Festrad
- 95: Losrad
- 96: Losrad
- 97: Doppelgangschaltkupplung

- 100: Drehmomentübertragungseinheit / Reibkupplung

## Patentansprüche

1. Hybrid-Antriebsbaugruppe (1) für ein Kraftfahrzeug, mit einer E-Maschine (3) und einem Schaltgetriebe (2), welches umfasst:
- eine erste Eingangswelle (10), die mit einem Verbrennungsmotor (4) des Kraftfahrzeugs verbindbar ist;
- eine zweite Eingangswelle (30), die mit einem Rotor (3a) der E-Maschine (3) verbunden ist und koaxial zur ersten Eingangswelle (10) und zum Rotor (3a) angeordnet ist;
- eine Ausgangswelle (50), die koaxial zur ersten Eingangswelle (10) angeordnet ist und mit einem Abtrieb des Kraftfahrzeugs verbindbar ist,
- eine erste Vorgelegewelle (70) und eine zweite Vorgelegewelle (90), die parallel und beabstandet zu der ersten Eingangswelle (10) und zueinander koaxial angeordnet sind;
- eine motorseitige Zahnradpaarung mit einem auf der zweiten Eingangswelle (30) angeordneten Antriebsrad (31) und mit einem auf der zweiten Vorgelegewelle (90) angeordneten Antriebszwischenrad (91);
- ein erstes Teilgetriebe mit mehreren Hauptgängen (I, II, III, V, VI), denen jeweils ein Festrad (11, 12, 74, 75) und ein damit kämmendes Losrad (71, 73, 13, 14) zugeordnet sind,
- ein zweites Teilgetriebe mit mehreren Nebengänge (e1, e2, R), denen jeweils ein Festrad (92, 93, 61, 62) und ein damit kämmendes Losrad (52, 53, 95, 96) zugeordnet sind, wobei die Festräder (92, 93, 61, 62) und Losräder (52, 53, 95 96) der Nebengänge (e1, e2, R) in einem axialen Bereich des Schaltgetriebes (2) liegen, der über ein abtriebsseitiges Ende der ersten Vorgelegewelle (70) hinausgeht, wobei im Zugbetrieb ein Drehmoment, das an der zweiten Eingangswelle (30) anliegt und über die motorseitige Zahnradpaarung auf die zweite Vorgelegewelle (90) geleitet wird, bei einem eingelegten Nebengang von der zweiten Vorgelegewelle (90) auf die Ausgangswelle (50) übertragen wird.
**dadurch gekennzeichnet, dass** wenigstens eine abtriebsseitige Zahnradpaarung mit einem auf der ersten Vorgelegewelle (70) angeordneten Abtriebszwischenrad (77), welches an einem abtriebsseitigen Ende der ersten Vorgelegewelle (70) angeordnet ist, und einem Abtriebsrad (51, 59) vorgesehen ist, wobei die Festräder (11, 12, 74, 75) und Losräder (71, 73, 13, 14) der Hauptgänge (II, III, V, VI) in einem axialen Bereich des Schaltgetriebes (2) zwischen dem Antriebszwischenrad (31) und dem Abtriebszwischenrad (77) angeordnet sind, wobei im Zugbetrieb bei einem eingelegten Hauptgang (I, II, III, V, VI) das Drehmoment von der ersten Eingangswelle (10) auf die erste Vorgelegewelle (70) und dort aus über die abtriebsseitige Zahnradpaarung auf die Ausgangswelle (50) übertragbar ist, wobei das Gesamtübersetzungsverhältnis eines jeden Hauptgangs (I, II, III, V, VI) von dem Übersetzungsverhältnis der abtriebsseitigen Zahnradpaarung abhängt.

2. Hybrid-Antriebsbaugruppe (1) nach Anspruch 1, **dadurch gekennzeichnet, dass** das Antriebsrad (31) und das Antriebszwischenrad (91) jeweils als Festräder ausgebildet sind.

3. Hybrid-Antriebsbaugruppe (1) nach Anspruch 1 oder 2, **dadurch gekennzeichnet, dass** das Abtriebszwischenrad (77) als drehfest auf der ersten Vorgelegewelle (70) angeordnetes Festrad ausgebildet ist.

4. Hybrid-Antriebsbaugruppe (1) nach einem der Ansprüche 1 bis 3, **dadurch gekennzeichnet, dass** das Abtriebsrad (51, 59) als ein drehfest auf der Ausgangswelle (50) angeordnetes Festrad ausgebildet ist.

5. Hybrid-Antriebsbaugruppe (1) nach einem der Ansprüche 1 bis 3, **dadurch gekennzeichnet, dass** das Abtriebsrad (51, 59) als ein schaltbares Losrad ausgebildet ist, das drehfest mit der Ausgangswelle (50) verbindbar ist.

6. Hybrid-Antriebsbaugruppe (1) nach Anspruch 5, **dadurch gekennzeichnet, dass** eine weitere abtriebsseitige Zahnradpaarung mit einem weiteren auf der ersten Vorgelegewelle (70) angeordneten Antriebszwischenrad (80) und mit einem weiteren Abtriebsrad (18) vorgesehen ist, das drehfest mit der Ausgangswelle (50) verbindbar ist.

7. Hybrid-Antriebsbaugruppe (1) nach Anspruch 6, **dadurch gekennzeichnet, dass** zwischen dem Abtriebsrad (59) und dem weiteren Abtriebsrad (18) eine Doppelgangschaltkupplung (60) angeordnet ist, durch die sich wahlweise das Abtriebsrad (59) oder das weitere Abtriebsrad (18) drehfest mit der Ausgangswelle (50) verbinden lassen.

8. Hybrid- Antriebsbaugruppe (1) nach einem der Ansprüche 1 bis 7, **dadurch gekennzeichnet, dass** eine Drehmomentübertragungseinheit (100) vorgesehen ist, durch die ein Drehmoment des Verbrennungsmotors (4) von der ersten Eingangswelle (10) auf die zweite Eingangswelle (30) übertragbar ist.

9. Hybrid- Antriebsbaugruppe (1) nach Anspruch 8, **dadurch gekennzeichnet, dass** die Drehmomentübertragungseinheit (100) als eine Reibkupplung (100) ausgebildet ist, die koaxial zur ersten Eingangswelle (10) angeordnet ist.

10. Hybrid-Antriebsbaugruppe (1) nach einem der Ansprüche 1 bis 9, **dadurch gekennzeichnet, dass** eine Koppeleinheit (79) vorgesehen ist, durch die die erste Vorgelegewelle (70) mit der zweiten Vorgelegewelle (90) drehfest verbindbar ist.

11. Hybrid-Antriebsbaugruppe (1) nach Anspruch 10, **dadurch gekennzeichnet, dass** die Koppeleinheit (79) als Schaltkupplung ausgebildet ist, die koaxial zur ersten Vorgelegewelle (70) angeordnet ist.

12. Hybrid-Antriebsbaugruppe (1) nach Anspruch 11, **dadurch gekennzeichnet, dass** die Schaltkupplung Teil einer Doppelgangschaltkupplung (78) ist, wobei in einer ersten Schaltstellung die erste Vorgelegewelle (70) und zweite Vorgelegewelle (90) drehfest miteinander verbunden sind und in einer zweiten Schaltstellung einer der Hauptgänge (I, II, III, V, VI) eingelegt ist.

13. Hybrid-Antriebsbaugruppe (1) nach einem der Ansprüche 1 bis 12, **dadurch gekennzeichnet, dass** einer der Nebengänge als Rückwärtsgang ausgeführt ist.

## Claims

1. Hybrid drive assembly (1) for a motor vehicle, having an electric machine (3) and a manual transmission (2) which comprises:
- a first input shaft (10) which is connectable to an internal combustion engine (4) of the motor vehicle;
- a second input shaft (30) connected to a rotor (3a) of the electric machine (3) and arranged coaxially with the first input shaft (10) and the rotor (3a);
- an output shaft (50) which is arranged coaxially with the first input shaft (10) and is connectable to an output of the motor vehicle,
- a first countershaft (70) and a second countershaft (90) which are arranged so as to be parallel and spaced apart from the first input shaft (10) and coaxial with each other;
- a motor-side gear pairing having a drive gear (31) arranged on the second input shaft (30) and having an intermediate drive gear (91) arranged on the second countershaft (90);
- a first partial transmission having several main gears (I, II, III, V, VI) to each of which a fixed gear (11, 12, 74, 75) and an idler gear (71, 73, 13, 14) meshing therewith are assigned,
- a second partial transmission having a plurality of secondary gears (e1, e2, R) to each of which a fixed gear (92, 93, 61, 62) and an idler gear (52, 53, 95, 96) meshing therewith are assigned, wherein the fixed gears (92, 93, 61, 62) and idler gears (52, 53, 95, 96) of the secondary gears (e1, e2, R) lie in an axial region of the manual transmission (2) which extends beyond an output-side end of the first countershaft (70), wherein, in traction operation, a torque which is applied to the second input shaft (30) and is transmitted to the second countershaft (90) via the motor-side gear pairing is transmitted from the second countershaft (90) to the output shaft (50) when a secondary gear is engaged.
**characterised in that** at least one output-side gear pairing is provided with an intermediate output gear (77) which is arranged on the first countershaft (70) and which is arranged at an output-side end of the first countershaft (70), and with an output gear (51, 59), wherein the fixed gears (11, 12, 74, 75) and idler gears (71, 73, 13, 14) of the main gears (II, III, V, VI) are arranged in an axial region of the manual transmission (2) between the intermediate input gear (31) and the intermediate output gear (77), wherein, in traction operation, when a main gear (I, II, III, V, VI) is engaged, the torque can be transmitted from the first input shaft (10) to the first countershaft (70) and from there via the output-side gear pairing to the output shaft (50), wherein the total transmission ratio of each main gear (I, II, III, V, VI) depends on the transmission ratio of the output-side gear pairing.

2. Hybrid drive assembly (1) according to claim 1, **characterised in that** the drive gear (31) and the intermediate drive gear (91) are each designed as fixed gears.

3. Hybrid drive assembly (1) according to claim 1 or 2, **characterised in that** the intermediate output gear (77) is designed as a fixed gear arranged on the first countershaft (70) in a rotationally fixed manner.

4. Hybrid drive assembly (1) according to any of claims 1 to 3, **characterised in that** the output gear (51, 59) is designed as a fixed gear arranged on the output shaft (50) in a rotationally fixed manner.

5. Hybrid drive assembly (1) according to any of claims 1 to 3, **characterised in that** the output gear (51, 59) is designed as a shiftable idler gear which can be connected to the output shaft (50) in a rotationally fixed manner.

6. Hybrid drive assembly (1) according to claim 5, **characterised in that** a further output-side gear pairing is provided with a further intermediate drive gear (80) arranged on the first countershaft (70) and with a further output gear (18) which can be connected in a rotationally fixed manner to the output shaft (50).

7. Hybrid drive assembly (1) according to claim 6, **characterised in that** between the output gear (59) and the further output gear (18) a double-speed clutch (60) is arranged by means of which the output gear (59) or the further output gear (18) can optionally be connected in a rotationally fixed manner to the output shaft (50).

8. Hybrid drive assembly (1) according to any one of claims 1 to 7, **characterised in that** a torque transmission unit (100) is provided by means of which a torque of the internal combustion engine (4) can be transmitted from the first input shaft (10) to the second input shaft (30).

9. Hybrid drive assembly (1) according to claim 8, **characterised in that** the torque transmission unit (100) is designed as a friction clutch (100) arranged coaxially with the first input shaft (10).

10. Hybrid drive assembly (1) according to any of claims 1 to 9, **characterised in that** a coupling unit (79) is provided by means of which the first countershaft (70) can be connected in a rotationally fixed manner to the second countershaft (90).

11. Hybrid drive assembly (1) according to claim 10, **characterised in that** the coupling unit (79) is designed as a shift clutch which is arranged coaxially with the first countershaft (70).

12. Hybrid drive assembly (1) according to claim 11, **characterised in that** the shift clutch is part of a double-gear shift clutch (78), wherein in a first shift position the first countershaft (70) and second countershaft (90) are connected to one another in a rotationally fixed manner and in a second shift position one of the main gears (I, II, III, V, VI) is engaged.

13. Hybrid drive assembly (1) according to any of claims 1 to 12, **characterised in that** one of the secondary gears is designed as a reverse gear.

## Revendications

1. Module d'entraînement hybride (1) pour un véhicule automobile, avec une machine électrique (3) et une boîte de vitesses (2) qui comporte :
- un premier arbre d'entrée (10) qui peut être relié à un moteur à combustion interne (4) du véhicule automobile ;
- un second arbre d'entrée (30) qui est relié à un rotor (3a) de la machine électrique (3) et est agencé coaxialement au premier arbre d'entrée (10) et au rotor (3a) ;
- un arbre de sortie (50) qui est agencé coaxialement au premier arbre d'entrée (10) et peut être relié à une sortie du véhicule automobile,
- un premier arbre intermédiaire (70) et un second arbre intermédiaire (90) qui sont agencés parallèlement et à distance du premier arbre d'entrée (10) et coaxialement l'un à l'autre ;
- un appariement de roue dentée côté moteur avec une roue d'entraînement (31) agencée sur le second arbre d'entrée (30) et avec une roue intermédiaire d'entraînement (91) agencée sur le second arbre intermédiaire (90) ;
- une première boîte partielle avec plusieurs rapports principaux (I, II, III, V, VI), auxquels sont associées respectivement une roue fixe (11, 12, 74, 75) et une roue mobile (71, 73, 13, 14) s'engrenant avec celle-ci,
- une seconde boîte partielle avec plusieurs rapports accessoires (e1, e2, R), auxquels sont associées respectivement une roue fixe (92, 93, 61, 62) et une roue mobile (52, 53, 95, 96) s'engrenant avec celle-ci, dans lequel les roues fixes (92, 93, 61, 62) et roues mobiles (52, 53, 95, 96) des rapports accessoires (e1, e2, R) se trouvent dans une zone axiale de la boîte de vitesses (2) qui sort au-delà d'une extrémité côté sortie du premier arbre intermédiaire (70), dans lequel en mode de traction, un couple qui est appliqué au second arbre d'entrée (30) et est transmis au second arbre intermédiaire (90) par le biais de l'appariement de roue dentée côté moteur est transmis du second arbre intermédiaire (90) à l'arbre de sortie (50) lorsqu'un rapport accessoire est passé.
**caractérisé en ce qu'**au moins un appariement de roue dentée côté sortie est prévu avec une roue intermédiaire de sortie (77) agencée sur le premier arbre intermédiaire (70) qui est agencé à une extrémité côté sortie du premier arbre intermédiaire (70), et une roue de sortie (51, 59), dans lequel les roues fixes (11, 12, 74, 75) et roues mobiles (71, 73, 13, 14) des rapports principaux (II, III, V, VI) sont agencées dans une zone axiale de la boîte de vitesses (2) entre la roue intermédiaire d'entraînement (31) et la roue intermédiaire de sortie (77), dans lequel en mode de traction pour un rapport principal passé (I, II, III, V, VI), le couple peut être transféré du premier arbre d'entrée (10) au premier arbre intermédiaire (70) et de là par le biais de l'appariement de roue dentée côté sortie à l'arbre de sortie (50), dans lequel le rapport de transmission total de chaque rapport principal (I, II, III, V, VI) dépend du rapport de transmission de l'appariement de roue dentée côté sortie.

2. Module d'entraînement hybride (1) selon la revendication 1, **caractérisé en ce que** la roue d'entraînement (31) et la roue intermédiaire d'entraînement (91) sont réalisées respectivement comme roues fixes.

3. Module d'entraînement hybride (1) selon la revendication 1 ou 2, **caractérisé en ce que** la roue intermédiaire de sortie (77) est réalisée comme roue fixe agencée de manière résistante à la rotation sur le premier arbre intermédiaire (70).

4. Module d'entraînement hybride (1) selon l'une quelconque des revendications 1 à 3, **caractérisé en ce que** la roue de sortie (51, 59) est réalisée comme une roue fixe agencée de manière résistante à la rotation sur l'arbre de sortie (50).

5. Module d'entraînement hybride (1) selon l'une quelconque des revendications 1 à 3, **caractérisé en ce que** la roue de sortie (51, 59) est réalisée comme une roue mobile commutable qui peut être reliée de manière résistante à la rotation à l'arbre de sortie (50).

6. Module d'entraînement hybride (1) selon la revendication 5, **caractérisé en ce qu'**un autre appariement de roue dentée côté sortie est prévu avec une autre roue intermédiaire d'entraînement (80) agencée sur le premier arbre intermédiaire (70) et avec une autre roue de sortie (18) qui peut être reliée de manière résistante à la rotation à l'arbre de sortie (50).

7. Module d'entraînement hybride (1) selon la revendication 6, **caractérisé en ce qu'**un embrayage de commutation à double rapport (60) est agencé entre la roue de sortie (59) et l'autre roue de sortie (18), par lequel au choix la roue de sortie (59) ou l'autre roue de sortie (18) peuvent être reliées de manière résistante à la rotation à l'arbre de sortie (50).

8. Module d'entraînement hybride (1) selon l'une quelconque des revendications 1 à 7, **caractérisé en ce qu'**une unité de transmission de couple (100) est prévue, par laquelle un couple du moteur à combustion interne (4) peut être transféré du premier arbre d'entrée (10) au second arbre d'entrée (30).

9. Module d'entraînement hybride (1) selon la revendication 8, **caractérisé en ce que** l'unité de transmission de couple (100) est réalisée comme un embrayage à friction (100) qui est agencé coaxialement au premier arbre d'entrée (10).

10. Module d'entraînement hybride (1) selon l'une quelconque des revendications 1 à 9, **caractérisé en ce qu'**une unité de couplage (79) est prévue, par laquelle le premier arbre intermédiaire (70) peut être relié de manière résistante à la rotation au second arbre intermédiaire (90).

11. Module d'entraînement hybride (1) selon la revendication 10, **caractérisé en ce que** l'unité de couplage (79) est réalisée comme embrayage de commutation qui est agencé coaxialement au premier arbre intermédiaire (70).

12. Module d'entraînement hybride (1) selon la revendication 11, **caractérisé en ce que** l'embrayage de commutation fait partie d'un embrayage de commutation à double rapport (78), dans lequel dans une première position de commutation, le premier arbre intermédiaire (70) et le second arbre intermédiaire (90) sont reliés entre eux de manière résistante à la rotation et dans une seconde position de commutation, un des rapports principaux (I, II, III, V, VI) est passé.

13. Module d'entraînement hybride (1) selon l'une quelconque des revendications 1 à 12, **caractérisé en ce qu'**un des rapports accessoires est réalisé comme rapport de marche arrière.
